# EUROPÄISCHE PATENTSCHRIFT

(11) **EP 3 435 179 B1**
(45) Veröffentlichungstag und Bekanntmachung des Hinweises auf die Patenterteilung: **08.07.2020**
(21) Anmeldenummer: 17183132.4
(22) Anmeldetag: 25.07.2017
(51) Int. Cl.: G05B 9/02, H04L 29/06, G05B 19/05, G05B 19/042

(54) **VERFAHREN ZUM GEMÄSS EINER SICHERHEITSNORM FUNKTIONAL SICHEREN AUSTAUSCH VON INFORMATIONEN**
METHOD FOR FUNCTIONALLY SECURE EXCHANGE OF INFORMATION ACCORDING TO A SAFETY STANDARD
PROCÉDÉ D'ÉCHANGE FONCTIONNEL SÉCURISÉ D'INFORMATIONS CONFORME À UNE NORME DE SÉCURITÉ

(43) Veröffentlichungstag der Anmeldung: 30.01.2019
(73) Patentinhaber: Wieland Electric GmbH, 96052 Bamberg (DE)
(72) Erfinder: Bilz, Falko, 14612 Falkensee (DE)
(74) Vertreter: 2K Patentanwälte Blasberg Kewitz & Reichel

(56) Entgegenhaltungen:
- EP-A1- 3 151 474
- EP-A2- 0 725 515
- EP-A2- 2 048 561
- DE-A1-102007 016 917

## Beschreibung

Die Erfindung betrifft ein Verfahren zum gemäß einer Sicherheitsnorm funktional sicheren Austausch von Informationen zwischen wenigstens drei Sicherheitssteuerungen, ausgebildet zum gemäß der Sicherheitsnorm funktional sicheren Steuern eines elektrischen Verbrauchers.

Im industriellen Bereich besteht bei Maschinen und deren Steuerung häufig der Bedarf nach einer Sicherheitsfunktion, d.h. einer Sicherstellung einer störungsfreien und insbesondere gefahrenfreien Funktion von Maschinen, die Gefahrenpotential für Mensch und Material bergen, d.h. z.B. Pressen, Fräswerkzeuge etc. Im Unterschied zu anderen Sicherheitsmaßnahmen wie elektrischer Sicherheit, Brand- und Strahlenschutz etc. wird dies vom Fachmann als "funktionale Sicherheit" bezeichnet. Hierzu werden derartige Maschinen in der Regel über eine Sicherheitssteuerung gesteuert, die zur Erfüllung der einschlägigen Sicherheitsnormen ausgelegt ist. Wichtige Normen im Bereich der funktionalen Sicherheit sind beispielsweise die IEC 61508, die EN 62061 und die EN ISO 13849-1.

In Bezug auf Sicherheitssteuerungen stellt sich dabei die Frage der sicheren Übertragung von Datenpaketen, z.B. zwischen einzelnen Modulen der Sicherheitssteuerung, sofern diese modular aufgebaut ist, von Gebern, die Eingangssignale für die Steuerung liefern, zu Aktoren, die die Schaltsignale der Sicherheitssteuerung ausführen und schließlich auch zwischen verschiedenen Sicherheitssteuerungen, die zu einem Verbund zusammengeschaltet sind. Hierfür werden in der Regel Protokolle zur sicheren Datenübertragung verwendet, wie sie z.B. in der EN 61784-3 (VDE 0803-500) oder der IEC 61158 beschrieben sind. Beispiele hierfür sind Systeme wie PROFIsafe, openSAFETY, FSoE oder CIP Safety. Diese werden üblicherweise zusammen mit nicht sicheren Protokollen wie beispielsweise PROFINET, POWERLINK, EtherCAT, EtherNet/IP oder Modbus TCP verwendet. Darüber hinaus existieren Systeme für spezifische Anwendungsfälle, z.B. das Train Communication Network (TCN) gemäß IEC 61375 sowie IEEE 1473-2010. Diese sicheren Protokolle erfüllen die besonderen Anforderungen an die funkionale Sicherheit über komplexe zusätzliche Verfahren wie z.B. eine fortlaufende Nummerierung von Datenpaketen, die Vorgabe einer Zeiterwartung mit Quittierung, eine Kennung für Sender und Empfänger oder eine zusätzliche Datensicherung per CRC (Cyclic Redundancy Check). Weitere entsprechende Verfahren und Systeme sind dem Fachmann aus der EP 2 356 528 B1, der EP 1 054 309 B2, der EP 2 315 088 B1, der EP 2 317 410 B1, der EP 2 375 636 A1 und der US 8 572 305 B2 bekannt.

Die EP2048561 zeigt ein Verfahren und eine Vorrichtung zum Aktualisieren und Bereitstellen von Steuerungsredundanz in Verarbeitungsbetrieben mit drei Sicherheitssteuerungen.

Bei großen Verbünden von Sicherheitssteuerungen besteht hierbei aber das Problem, dass durch die beschriebene Komplexität die entstehende Datenmenge die Anzahl der möglichen Teilnehmer im Verbund limitiert. Die Anzahl der unidirektionalen logischen Kommunikationsverbindungen ist nämlich 2(N-1), wenn N die Anzahl der Teilnehmer ist und jeder Teilnehmer mit jedem kommuniziert. In größeren Kommunikationsnetzen kann diese Anzahl an logischen Kommunikationsverbindungen einen Wert übersteigen, der vom einzelnen Teilnehmer innerhalb einer vorgegebenen Zeit empfangen und verarbeitet werden kann. Auch kann die Anzahl der zu sendenden Datenpakete einen Wert übersteigen, der von einem einzelnen Teilnehmer innerhalb einer vorgegebenen Zeit realisierbar ist. Einzelne oder alle Teilnehmer sind somit nicht in der Lage, Daten mit allen erforderlichen Netzteilnehmern auszutauschen, insbesondere auf sichere Art.

Es ist daher Aufgabe der Erfindung, ein Verfahren der eingangs genannten Art anzugeben, welches die Zusammenschaltung einer vergleichsweise großen Anzahl von Sicherheitssteuerungen in einem Verbund bei gleichzeitig sicherer Kommunikation erlaubt.

Diese Aufgabe wird erfindungsgemäß gelöst, indem ein Master zur Verfügung gestellt wird, und eine Mehrzahl von Sicherheitssteuerungen als Slave ausgebildet ist, und wobei Datenpakete von einer Mehrzahl von Slaves durch den Master empfangen werden, der Master die Datenpakete zu einem Sammeldatenpaket verbindet, und das Sammeldatenpaket an alle Slaves sendet.

Die Erfindung geht dabei von der Überlegung aus, dass jedes Datenpaket in der Regel einen, vom jeweiligen Protokoll abhängigen, "Overhead" umfasst, um den die eigentlichen Nutzdaten ergänzt werden, bevor das Datenpaket in das Kommunikationsnetzwerk versendet wird. Es ist daher bei den meisten Protokollen der Fall, dass mehrere einzelne Datenpakete in Summe ein schlechteres Verhältnis von Nutzdaten- zu Gesamtdatenmenge haben, als es ein einzelnes großes Datenpaket hat. Des Weiteren ist der Programmfluss einer Prozesseinheit, die eine Daten-Empfangseinheit umfasst, mit jedem ankommenden Datentelegramm zu unterbrechen, um dieses zu verarbeiten oder zumindest für eine spätere Verarbeitung zwischenzuspeichern. Es ist insbesondere bei funktional sicheren Geräten ein Designziel, diese sogenannte Interrupt-Last möglichst gering zu halten. Daher sollten mehrere Datenpakete für eine funktional sichere Kommunikation zu einem einzelnen Paket gebündelt um so - zumindest anteilig - den Protokoll-Overhead zu reduzieren sowie die kumulierte Umschaltzeit für die Verarbeitung bzw. Zwischenspeicherung empfangener Daten zu verkürzen. Dies wird durch Bereitstellung wenigstens eines Masters erreicht. Der Master selbst kann eine der Sicherheitssteuerungen sein, kann aber auch als separates Gerät ausgebildet sein. Er ist zentrale Empfangseinrichtung für Sendedaten von allen Slave -Sicherheitssteuerungen, kombiniert sie zu Sammeldatenpaketen und sendet diese selbst an alle Slaves. Das Sammeldatenpaket kann dabei auch fragmentiert sein. Wesentlich ist hierbei, dass keine direkte Kommunikation und Datenübermittlung zwischen den Slaves erforderlich ist, sondern alle Kommunikation über den Master realisiert ist.

In einer ersten vorteilhaften Ausgestaltung sind die funktional sicheren Datenanteile der Datenpakete unverändert im Sammeldatenpaket enthalten. Dies ist insbesondere unter dem Gesichtspunkt der Datensicherheit sinnvoll. In diesem Fall kann vorteilhafterweise die Bildung des Sammeldatenpaketes im Master auch durch eine nicht sichere Verarbeitungseinheit erfolgen.

In einer zweiten vorteilhaften Ausgestaltung werden die empfangenen Datenpakete vor dem Verbinden zu dem Sammeldatenpaket durch den Master in funktional sicherer Weise derart verarbeitet, dass Anteile der Datenpakete entnommen und/oder den Datenpaketen Daten hinzugefügt werden. Mit anderen Worten: Die Datenpakete werden im Master in definierter Weise bearbeitet und/oder manipuliert. Hier können z.B. zusätzliche Informationen hinterlegt werden oder aber es wird die Datenmenge reduziert. Insbesondere umfassen die von dem Master zugefügten Daten vorteilhafterweise eine elektronische Signatur.

In einer alternativen oder zusätzlichen vorteilhaften Ausgestaltung gehören die Slaves einer Multicastgruppe an und das Senden des Sammeldatenpaketes erfolgt über Multicast. In einer derartigen Ausgestaltung wird das Sammeldatenpaket nur an die Multicastgruppe gesendet.

In weiterer vorteilhafter Ausgestaltung des Verfahrens erfolgt das Senden eines Sammeldatenpaketes zyklisch und der maßgebliche Zeitgeber für das Senden im Master vorliegt. Mit anderen Worten: Das Senden von Sammeldatenpaketen an die Slaves erfolgt wiederkehrend und ist vom Master getaktet. Zwischen dem Senden von Sammeldatenpaketen empfängt der Master die Datenpakete von den Slaves.

Hierbei wartet der Master vorteilhafterweise nach dem Senden eines Sammeldatenpaketes eine im Betrieb konfigurierbare Maximalzeit auf den Empfang von Datenpaketen aller Slaves, bevor er erneut ein Sammeldatenpaket versendet. Dabei verbindet der Master vorteilhafterweise das zuletzt vom jeweiligen Slave empfangene Datenpaket in das mit Erreichen der Maximalzeit an die Slaves abzusendende Sammeldatenpaket. Mit anderen Worten: Ist die Maximalzeit erreicht und wurden bis dahin noch nicht von allen Slaves neue Daten empfangen, wird für diesen wenigstens einen Slave der zuletzt von diesem Slave empfangene Dateninhalt unverändert verwendet. Der wenigstens eine Master ist dazu mit einer Speichereinheit (RAM) ausgestattet, um die zuletzt von den einzelnen Slaves empfangenen Daten vollständig zwischenspeichern zu können. Hierbei kann bei Überschreiten der Maximalzeit der Master auch entsprechend reagieren und beispielsweise einen sicheren Zustand einnehmen, beispielsweise vollständig oder beispielsweise nur in dem Maße, wie es die Daten des Slaves betrifft, von dem nun keine aktuellen Daten vorliegen.

Weiterhin wartet der Master nach dem Senden eines Sammeldatenpaketes vorteilhafterweise eine im Betrieb konfigurierbare Minimalzeit Tmin wartet, bevor er erneut ein Sammeldatenpaket versendet. Mit anderen Worten: Der Master sendet die Sammeldatenpakete zyklisch mit einem Zeitintervall zwischen Minimal- und Maximalzeit.

Vorteilhafterweise ergänzt der Master im Sammeldatenpaket Informationen zur jeweiligen Zeitspanne zwischen dem Senden des zuletzt gesendeten Sammeldatenpaketes und dem Empfang der Daten vom jeweiligen Slave. Hierdurch ist allen Slaves bekannt, wie lange die letzte Aktualisierung der Daten jedes Slaves zurückliegt.

In weiterer vorteilhafter Ausgestaltung legt der jeweilige Slave den Zeitpunkt zum Versenden seines nächsten Datenpaketes an den Master anhand der vom Master ergänzten Informationen zur jeweiligen Zeitspanne dynamisch fest. Mit anderen Worten: Der Slave bestimmt selbständig und dynamisch, wann die im Master gespeicherten Daten aktualisiert werden sollen, abhängig von den vom Master empfangenen Informationen zur Zeitspanne seit der letzten Aktualisierung. Damit wird erreicht, dass die vom Slave ausgesendeten Daten weitestgehend aktuell sind, also beispielsweise den relevanten Teilen des aktuellen Prozessabbildes des Slaves entsprechen.

In weiterer vorteilhafter Ausgestaltung wird für eine Mehrzahl von Slaves jeweils eine Multicastgruppe konfiguriert und eine Mehrzahl von Mastern gehören allen diesen Multicastgruppen an. Die Slaves senden die Datenpakete dabei an ihre jeweilige Multicastgruppe und die Mehrzahl von Mastern empfängt diese Datenpakete. Sind also mehrere Master vorhanden, so werden Multicastgruppen unter den Slaves definiert, die Master sind aber in allen Multicastgruppen enthalten. Jeder Master gehört also zu jeder Multicastgruppe und empfängt somit die Daten von allen Slaves.

In einer derartigen Konfiguration sendet vorteilhafterweise die Mehrzahl von Mastern jeweils ein Sammeldatenpaket an alle Slaves, wobei jedes Sammeldatenpaket eine Absenderkennung enthält, anhand derer jeder Slave die Sammeldatenpakete voneinander unterscheiden kann. Der Slave erhält also mehrere Sammeldatenpakete und kann unterscheiden, von welchem Master sie jeweils gesendet wurden.

In jedem Slave ist in einer derartigen Ausgestaltung vorteilhafterweise eine Entscheidungslogik konfiguriert, anhand der jeweilige Slave fehlerhafte und/oder unvollständige und/oder veraltete Sammeldatenpakete wenigstens eines der Master verwirft und stattdessen ein vollständiges und fehlerfreies Datenpaket von einem anderen Master verarbeitet. Die mehreren Master stellen also redundante Sammeldatenpakete zur Verfügung und der Slave wählt nur fehlerfreie Sammeldatenpakete zur Verarbeitung.

In vorteilhafter Ausgestaltung ist die Anzahl der Master und/oder die Anzahl der Slaves im Betrieb konfigurierbar und allen Mastern und Slaves ist diese Konfiguration bekannt. Mit anderen Worten: Während des Betriebs kann die Master-/Slave-Architektur automatisiert verändert und angepasst werden. Die Sicherheitssteuerungen sind hierfür entsprechend ausgebildet.

In einer vorteilhaften Ausgestaltung des Verfahrens haben im Sammeldatenpaket des jeweiligen Masters die Anteile der Datenpakete der einzelnen Slaves eine vorkonfigurierte feste Position. In dazu alternativer vorteilhafter Ausgestaltung des Verfahrens ist im Sammeldatenpaket ein Datenbereich vorhanden, anhand dessen Inhalt die Position der einzelnen Anteile der Datenpakete der einzelnen Slaves innerhalb des Sammeldatenpaketes eindeutig bestimmbar ist.

In weiterer vorteilhafter Ausgestaltung enthalten auch die Datenpakete der Slaves zumindest teilweise elektronische Signaturen.

In alternativer oder zusätzlicher vorteilhafter Ausgestaltung werden die Datenpakete der Slaves und/oder die Sammeldatenpakete der Master verschlüsselt.

Schließlich sind in den Mastern und/oder den Slaves vorteilhafterweise jeweils Zählerspeicher vorhanden, in denen die Anzahl an gesendeten und/oder an vollständig empfangenen und/oder an unvollständig empfangenen und/oder an vollständig aber fehlerhaft empfangenen Datenpaketen oder Sammeldatenpaketen gespeichert wird.

In einer weiteren vorteilhaften Ausgestaltung des Verfahrens wird in den Datenpaketen der Slaves ein Datenbereich vorgesehen, der mit jedem neu vom Slave versendeten Datenpaket verändert wird. Dies kann, um nur eines von vielen denkbaren Beispielen zu nennen, beispielsweise eine Veränderung um einen festen Betrag, beispielsweise um den Wert plus Eins sein. Vorteilhafterweise wird dabei durch die Slaves durch Vergleich des, dem jeweiligen Slave zugeordneten, Datenbereichs im zuletzt von einem Master empfangenen Sammeldatenpaket mit dem entsprechenden Datenbereich im zuvor empfangenen Sammeldatenpaket auf Datenänderung ein Übertragungsfehler und/oder eine -verzögerung und/oder eine -verfälschung ermittelt. Mit anderen Worten: Alle Netzteilnehmer vergleichen jeweils den, dem jeweiligen Slave zuzuordnenden, Datenbereich des zuletzt vom Master bzw. den Mastern empfangenen mit dem zuvor empfangenen Datenbereich. Liegt eine Änderung vor, kann auf eine intakte Datenverbindung im Sinne von Erreichbarkeit und Übertragungszeit geschlossen werden. Andernfalls ist von Unterbrechung der Verbindung oder Übertragungsfehlern zwischen dem Master, von dem das Sammeldatenpaket empfangen wurde und dem Slave, dessen Datenanteil nicht verändert wurde, auszugehen.

In weiterer vorteilhafter Ausgestaltung gibt ein Master einen Wert innerhalb des Sammeldatenpaketes vor, der sich von einem entsprechenden Wert innerhalb des zuvor gesendeten Sammeldatenpaktes unterscheidet, und alle Slaves übernehmen diesen Wert in den jeweils zu ändernden Datenbereich des als nächstes zu sendenden Datenpakets. Jeder Netzteilnehmer kann durch Vergleich dieser Werte innerhalb des Sammeldatenpaketes feststellen, ob alle Slaves ein aktuelles Datenpaket zum Master innerhalb der Maximalzeit gesendet haben und ob der Master dieses Datenpaket empfangen und in das neue Sammeldatenpaket übernommen hat. Damit ist es allen Netzteilnehmern möglich, die Synchronizität der Daten der einzelnen Slaves zu erkennen. Asynchronitäten lassen auf Ausfall des jeweiligen Slaves oder der Unterbrechung der Kommunikationsverbindung oder Kommunikationsproblemen zwischen Slave und Master schließen.

In alternativer oder zusätzlicher vorteilhafter Ausgestaltung wird in dem jeweiligen Slave eine Slave-Maximalzeit hinterlegt, wobei, wenn durch den jeweiligen Slave innerhalb der Slave-Maximalzeit kein neues Sammeldatenpaket empfangen wurde, der jeweilige Slave einen Ausfall eines Masters und/oder eine Unterbrechung einer Kommunikationsverbindung ermittelt. Mit anderen Worten: Der einzelne Slave erkennt einen Ausfall des Masters oder eine Unterbrechung der Kommunikationsverbindung oder Kommunikationsprobleme zwischen sich und dem Master, wenn innerhalb der Slave-Maximalzeit kein neues Datenpaket vom Master empfangen wurde. Der Slave kann dann entsprechend reagieren und beispielsweise einen sicheren Zustand einnehmen, beispielsweise vollständig oder beispielsweise nur in dem Maße, wie es die Daten der Netzteilnehmer betrifft, von denen nun keine aktuellen Daten vorliegen.

In noch weiterer vorteilhafter Ausgestaltung werden in den Datenpaketen der Slaves und/oder den Sammeldatenpaketen der Master Datenbereiche vorgesehen, in denen eine Information über erkannte Zeitüberschreitungen hinterlegt wird. Dies dient dazu, die übrigen Netzteilnehmer über erkannte Zeitüberschreitungen zu informieren. Damit können Netzteilnehmer auf Kommunikationsprobleme, die andere Slaves haben, schließen und entsprechend, wie bereits in beispielhafter Weise beschrieben, reagieren. Die Aufgabe wird erfindungsgemäß weiterhin durch einen Verbund gemäß Anspruch 25 gelöst.

Die mit der Erfindung erzielten Vorteile bestehen insbesondere darin, dass durch die Bereitstellung eines Masters in einem Verbund aus Sicherheitssteuerungen, der den Datenverkehr konzentriert, indem er die Datenpakete aller Slaves sammelt, kombiniert und als ein Sammeldatenpaket sendet, eine Reduktion der Daten und der Anzahl der Datenpakete im System erreicht wird und so eine größere Anzahl von Sicherheitssteuerungen verbunden werden kann. Kommt ein weiterer Slave zum Kommunikationsnetzwerk hinzu, erhöht sich zwar die Größe des Sammeldatenpaketes um die Daten dieses weiteren Slaves. Weitere logische Kommunikationsverbindungen brauchen vom einzelnen Slave jedoch nicht konfiguriert zu werden. Auch brauchen die Slaves keine zusätzlichen Ressourcen, insbesondere RAM, für neue logische Datenverbindungen bereitzustellen. Die erfindungsgemäße Art der Kommunikation skaliert also sehr gut mit der Anzahl der Kommunikationsteilnehmer im Sinne des Ressourcenbedarfs sowie auch der zeitlichen Abfolge.

Geräte, die insbesondere aufgrund der Hardware nur für kleinere Kommunikationsnetze ausgelegt sind, können damit auch in größeren Netzen mit relativ vielen Kommunikationspartnern untereinander Daten austauschen. Erforderlich ist hierzu lediglich wenigstens ein Master, der ausreichend Ressourcen für den Empfang der Daten von allen Slaves, die Zusammenfügung zu einem Datenpaket und Aussendung zu den Slaves jeweils innerhalb einer vorgegebenen Maximalzeit, hat.

Ausführungsbeispiele der Erfindung werden anhand von Zeichnungen näher erläutert. Darin zeigen:
- FIG 1: einen Verbund von Sicherheitssteuerungen mit einem Master und zwei Slaves, die funktional sicher kommunizieren,
- FIG 2: schematisch die Verarbeitung der Datenpakete von Slaves zu einem Sammeldatenpaket durch den Master ohne Veränderung,
- FIG 3: schematisch die Verarbeitung der Datenpakete von Slaves zu einem Sammeldatenpaket durch den Master mit Veränderung,
- FIG 4: einen Verbund von Sicherheitssteuerungen mit einem Master und zwei Slaves, die funktional sicher kommunizieren, wobei Master und Slaves einer Multicastgruppe angehören, und
- FIG 5: einen Verbund von Sicherheitssteuerungen mit zwei Masters und zwei Slaves, die funktional sicher kommunizieren, wobei für jeden Slave jeweils eine Multicast-Gruppe konfiguriert ist, der jeweils beide Master angehören.

Gleiche Teile sind in allen Zeichnungen mit denselben Bezugszeichen versehen.

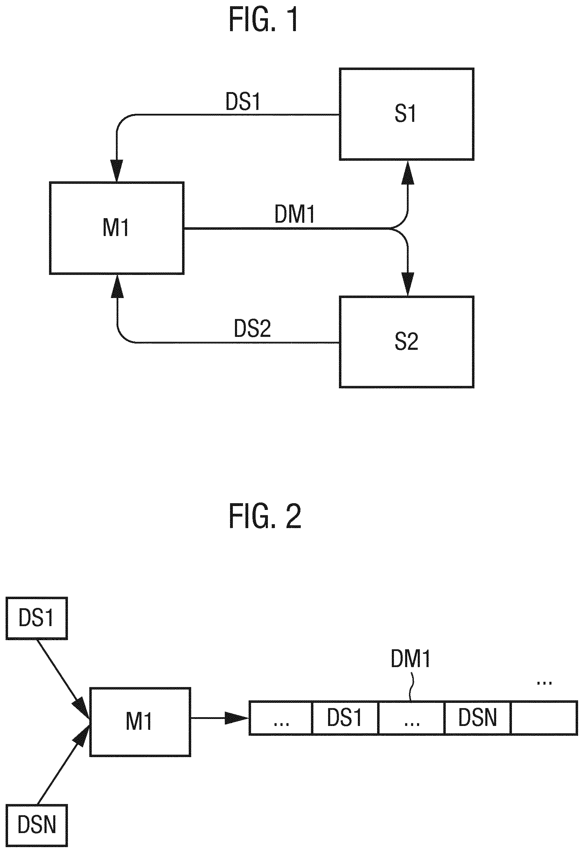

Die FIG 1 zeigt einen Verbund von drei Sicherheitssteuerungen M1, S1, S2, die gemäß der Norm EN ISO 13849 im Sinne der funktionalen Sicherheit ausgestaltet sind. Diese sind in üblicher Weise mit Anschlussklemmen für Sensoren und Aktoren und einer Schnittstelle zur Kommunikation mit den anderen Sicherheitssteuerungen M1, S1, S2 ausgestattet. Sie umfassen beispielsweise jeweils zwei nicht näher gezeigte, redundant arbeitende Mikrocontroller, die mit einer Firmware versehen sind, die die im Folgenden beschriebenen Verfahren ausführt. Die Sicherheitssteuerungen können auch modular aufgebaut sein. All diese Details sind jedoch nicht näher dargestellt, da im Folgenden lediglich die Kommunikation zwischen den Sicherheitssteuerungen M1, S1, S2 näher beschrieben wird.

Die Sicherheitssteuerungen M1, S1, S2 kommunizieren untereinander in funktional sicherer Weise. Um hierbei eine möglichst große Anzahl von Sicherheitssteuerungen M1, S1, S2 miteinander verbinden zu können, ist eine der Sicherheitssteuerungen M1, S1, S2 als Master M1 ausgestaltet, die übrigen als Slaves S1, S2. In alternativen, nicht dargestellten Ausführungsformen können auch alle Sicherheitssteuerungen als Slave ausgeführt sein und es wird ein separater Master bereitgestellt.

Der Master M1 dient als Konzentrator der Kommunikation, in dem die Slaves S1, S2 nicht direkt miteinander kommunizieren, sondern ihre Datenpakete DS1, DS2 lediglich an den Master M1 senden. Der Master M1 verbindet die Datenpakete DS1, DS2 zu einem Sammeldatenpaket DM1, welches dann an alle Slaves S1, S2 gesendet wird.

Die Datenpakete DS1, DS2 bestehen in der Regel aus funktional sicheren (Nutz-)Daten, die letztlich den für die Sicherheitsfunktion wesentlichen Teil ausmachen, sowie weiteren nicht sicheren Nutzdaten und einem Protokoll-Overhead. Als Overhead gelten Daten, die nicht primär zu den Nutzdaten zählen, sondern als Zusatzinformation zur Übermittlung, Speicherung und/oder Verarbeitung benötigt werden. Die Datenpakete DS1, DS2 können dabei auch eine elektronische Signatur enthalten.

FIG 2 zeigt eine erste Ausführungsform der Erstellung eines Sammeldatenpakets DM1 durch den Master M1 in dem System nach FIG 1. Die beiden Datenpakete DS1, DS2 der Slaves S1, S2 werden vom Master M1 in ein Sammeldatenpaket DM1 zusammengefasst. Hierbei werden in der Ausführungsform des Verfahrens nach FIG 2 die funktional sicheren Datenanteile der Datenpakete DS1, DS2 unverändert in das Sammeldatenpaket DM1 übernommen. Der Master M1 kann weitere Daten im Sammeldatenpaket DM1 ergänzen. Dadurch ist es möglich, den Master M1 auch als nicht funktional sichere Verarbeitungseinheit auszubilden, da keine Manipulation der Daten vorgenommen wird.

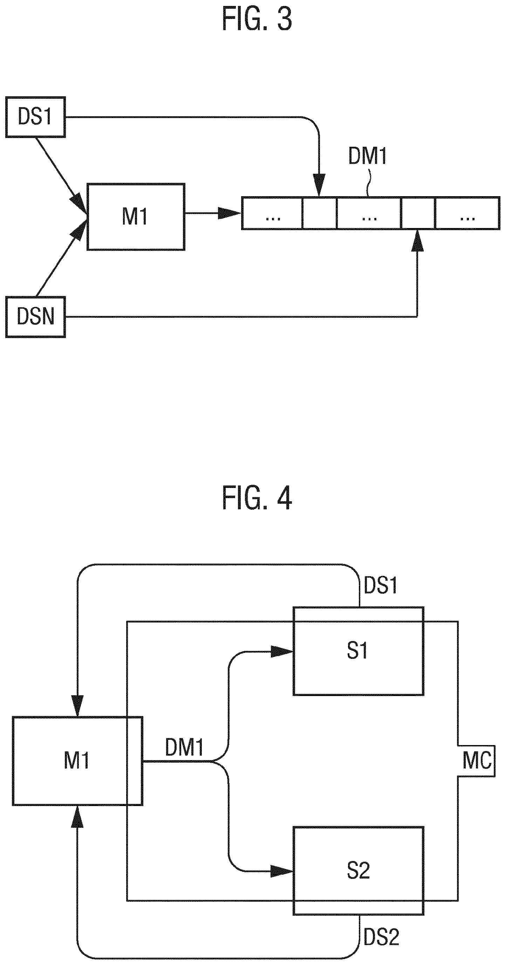

FIG 3 zeigt eine zweite mögliche Ausführungsform der Erstellung eines Sammeldatenpakets DM1 durch den Master M1 in dem System nach FIG 1. Der Master M1 ist hier als funktional sichere Verarbeitungseinheit ausgelegt und verarbeitet die Datenpakete DS1, DS2 vor dem Verbinden im Sammeldatenpaket DM1 in funktional sicherer Weise, entweder durch Hinzufügung oder Entnahme von Anteilen der Daten der Datenpakete DS1, DS2. In beispielhaften Ausführungsformen fügt der Master M1 eine elektronische Signatur an die Datenpakete DS1, DS2 an.

In beiden Ausführungsformen nach FIG 3 und FIG 4 können verschiedene Konventionen zur Festlegung der Position der (ggf. modifizierten) Datenpakete DS1, DS2 der Slaves S1, S2 im Sammeldatenpaket DM1 vorgesehen sein: So können einerseits die Positionen innerhalb des Sammeldatenpakets DM1 fest vorkonfiguriert sein, andererseits könnte aber auch ein Addressierungsdatenbereich im Sammeldatenpaket DM1 vorgesehen sein, der entsprechende Informationen zur (dann beliebig wählbaren) Position der (ggf. modifizierten) Datenpakete DS1, DS2 der Slaves S1, S2 im Sammeldatenpaket DM1 enthält und von den Slaves S1, S2 ausgelesen wird.

FIG 4 zeigt eine alternative Ausführungsform des Systems nach FIG 1, in dem die Sicherheitssteuerungen M1, S1, S2 in einem größeren, nicht näher gezeigten Verbund eingebunden sind. Die gezeigten Sicherheitssteuerungen M1, S1, S2 gehören hierbei in einer Multicastgruppe MC an und das Senden des Sammeldatenpaketes DM1 erfolgt über Multicast.

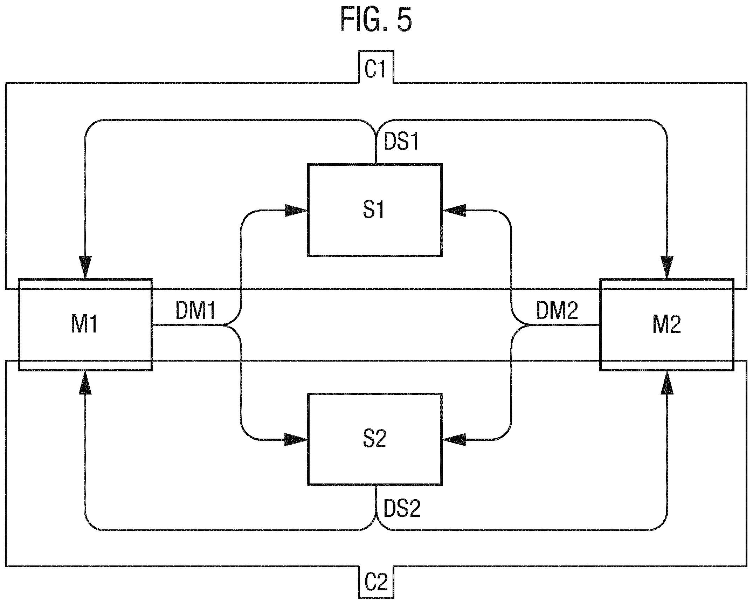

FIG 5 zeigt eine weitere alternative Ausführungsform, in der zwei Master M1, M2 und zwei Slaves S1, S2 im Verbund angeordnet sind. Hierbei ist für jeden Slave S1, S2 eine Multicastgruppe C1, C2 konfiguriert. Jede Multicastgruppe C1, C2 umfasst den jeweils ihr zugeordneten Slave S1, S2 sowie beide Master M1, M2. Die Master M1, M2 sind somit in beiden Multicastgruppen C1, C2 enthalten. In FIG 5 enthält die erste Multicastgruppe C1 also einen Slave S1 sowie beide Master M1, M2. Die zweite Multicastgruppe C2 enthält den anderen Slave S2 sowie ebenfalls beide Master M1, M2. Die Slaves S1, S2 senden dabei ihre Datenpakete DS1, DS2 per Multicast an ihre jeweilige Multicastgruppe C1, C2.

Beide Master M1, M2 verbinden die Datenpakete DS1, DS2 wie bereits zu FIG 2 oder FIG 3 beschrieben zu einem jeweiligen Sammeldatenpaket DM1, DM2 und senden ihre jeweiligen Sammeldatenpakete DM1, DM2 an alle Slaves S1, S2. Dadurch sind redundante Sammeldatenpakete DM1, DM2 vorhanden. Die Sammeldatenpakete DM1, DM2 enthalten jeweils Kennungen, die den sendenden Master M1, M2 identifizieren und anhand derer die Slaves S1, S2 erkennen können, von welchem Master M1, M2 das jeweilige Sammeldatenpaket DM1, DM2 kommt.

Im Ausführungsbeispiel der FIG 5 ist in den Slaves S1, S2 hierbei eine Entscheidungslogik realisiert, mittels derer der jeweilige Slave S1, S2 fehlerhafte und/oder unvollständige oder veraltete Sammeldatenpakete DM1, DM2 identifizieren kann. Wird ein fehlerhaftes und/oder unvollständiges Sammeldatenpaket DM1, DM2 identifiziert, so wird es verworfen und das andere, vollständige und fehlerfreie Sammeldatenpaket DM1, DM2 verarbeitet.

Im Folgenden werden Varianten bereits beschriebenen Ausführungsformen beschrieben, die nicht näher in einer eigenen Zeichnung beschrieben sind. So werden in beispielhaften Ausführungsformen der oder die Master M1, M2 die Sammendatenpakete DM1, DM2 zyklisch mit einem Zeitintervall zwischen einer Minimalzeit Tmin und einer Maximalzeit Tmax versenden. Der maßgebliche Zeitgeber hierfür ist im jeweiligen Master M1, M2 enthalten. Minimal- und Maximalzeit Tmin, Tmax können dadurch jeweils im Betrieb konfiguriert werden. Ist die Maximalzeit Tmax erreicht und wurde bis dahin noch nicht von allen Slaves S1, S2 neue Datenpakete DS1, DS2 empfangen, wird für diesen wenigstens einen Slave S1, S2 der zuletzt von diesem Slave S1, S2 empfangene Dateninhalt unverändert verwendet. Der oder die Master M1, M2 sind dazu mit einer Speichereinheit ausgestattet, um die zuletzt von den einzelnen Slaves S1, S2 empfangenen Datenpakete DS1, DS2 vollständig zwischenspeichern zu können. Zudem kann in diesem Fall der Master M1, M2 entsprechend reagieren, und beispielsweise einen sicheren Zustand einnehmen, entweder vollständig oder nur in dem Maße, wie es die Daten des Slaves S1, S2 betrifft, von dem nun keine aktuellen Daten vorliegen.

In weiteren Ausführungsformen können der oder die Master M1, M2 im Sammeldatenpaket DM1, DM2 Informationen hinterlegen, die die Zeitspanne seit dem letzten Empfang von Datenpaketen DS1, DS2 identifizieren. Dadurch kann jeder Slave S1, S2 anhand des empfangenen Sammeldatenpakets DM1, DM2 ermitteln, wann der Master M1, M2 das letzte Datenpaket DS1, DS2 erhalten hat, und mit Hilfe dieser Information dynamisch festlegen, wann das nächste Datenpaket S1, S2 gesendet wird. Der Slave S1, S2 sendet somit nicht zwingend zwischen jedem Empfang eines Sammeldatenpakets DM1, DM2 ein eigenes neues Datenpaket DS1, DS2. Von Vorteil ist ein möglichst spätes Versenden durch den Slave, wodurch die Daten möglichst aktuell, also beispielsweise relevanten Prozessdaten des Slaves entsprechen, die weitestgehend aktuell sind.

Für alle Ausführungsformen gilt, dass die Sammeldatenpakete DM1, DM2 auch fragmentiert sein können. Zudem können die Sicherheitssteuerungen M1, M2, S1, S2 jeweils so ausgebildet sein, dass sie sowohl eine Rolle als Slave S1, S2 als auch als M1, M2 einnehmen können. Die konkrete Festlegung auf eine Rolle als Slave S1, S2 oder als Master M1, M2 wird im Betrieb dynamisch konfiguriert.

Desweiteren können Sammeldatenpakete DM1, DM2 und Datenpakete DS1, DS2 jeweils verschlüsselt übertragen werden. In weiteren beispielhaften Ausführungsformen sind in den Mastern M1, M2 und Slaves S1, S2 jeweils Zählerspeicher, die die Anzahl an gesendeten und/oder an vollständig empfangenen und/oder an unvollständig empfangenen und/oder an vollständig aber fehlerhaft empfangenen Sammeldatenpaketen DM1, DM2 oder Datenpaketen DS1, DS2 speichern.

In weiteren, nicht näher anhand von Zeichnungen beschriebenen Ausführungsformen kann in den Datenpaketen DS1, DS2 der Slaves S1, S2 ein Bereich vorgesehen sein, der mit jedem neu vom Slave S1, S2 versendeten Datenpaket DS1, DS2 verändert wird. Der in diesen Bereich zu schreibende Wert kann in Ausführungsbeispielen durch den Master M1, M2 innerhalb des Sammeldatenpaketes DM1, DM2 vorgegeben werden. Damit ist es allen Netzteilnehmern möglich, die Synchronitizität der Daten der einzelnen Slaves S1, S2 zu erkennen. Schließlich kann der einzelne Slave S1, S2 einen Ausfall des Masters M1, M2 oder eine Unterbrechung der Kommunikationsverbindung oder Kommunikationsprobleme zwischen sich und dem Master M1, M2 erkennen, wenn innerhalb einer im Slave S1, S2 definierten Maximalzeit (TmaxSlave) kein neues Sammeldatenpaket DM1, DM2 vom Master M1, M2 empfangen wurde. Der Slave S1, S2 kann dann entsprechend reagieren. In noch weiteren Ausführungsformen sind in den Datenpaketen DS1, DS2 der Slaves S1, S2 und/oder den Sammeldatenpaketen DM1, DM2 der Master M1, M2 Datenbereiche vorgesehen, die die übrigen Netzteilnehmer über erkannte Zeitüberschreitungen informieren. Damit können Netzteilnehmer auf Kommunikationsprobleme, die andere Slaves haben, schließen und entsprechend reagieren.

### Bezugszeichenliste

- C1, C2, MC: Multicastgruppe
- DM1, DM2: Sammeldatenpaket
- DS1, DS2: Datenpaket
- M1, M2: Master
- S1, S2: Slave
- Tmin: Minimalzeit
- Tmax: Maximalzeit
- TmaxSlave: Slave-Maximalzeit

## Patentansprüche

1. Verfahren zum gemäß einer Sicherheitsnorm funktional sicheren Austausch von Informationen zwischen wenigstens drei Sicherheitssteuerungen, ausgebildet zum gemäß einer Sicherheitsnorm funktional sicheren Steuern eines elektrischen Verbrauchers, wobei
ein Master (M1) zur Verfügung gestellt wird, und eine Mehrzahl von Sicherheitssteuerungen als Slave (S1...SN) ausgebildet ist, und wobei Datenpakete (DS1...DSN) von einer Mehrzahl von Slaves (S1...SN) durch den Master (M1) empfangen werden, der Master (M1) die Datenpakete (DS1...DSN) zu einem Sammeldatenpaket (DM1) verbindet, und das Sammeldatenpaket (DM1) an alle Slaves (S1...SN) sendet.

2. Verfahren nach Anspruch 1, wobei die funktional sicheren Datenanteile der Datenpakete (DS1...DSN) unverändert im Sammeldatenpaket (DM1) enthalten sind.

3. Verfahren nach Anspruch 2, wobei die Bildung des Sammeldatenpaketes (DM1) durch eine nicht sichere Verarbeitungseinheit erfolgt.

4. Verfahren nach einem der vorhergehenden Ansprüche, wobei die empfangenen Datenpakete (DS1...DSN) vor dem Verbinden zu dem Sammeldatenpaket (DM1) durch den Master (M1) in funktional sicherer Weise derart verarbeitet werden, dass Anteile der Datenpakete (DS1 ...DSN) entnommen und/oder den Datenpaketen (DS1...DSN) Daten hinzugefügt werden.

5. Verfahren nach Anspruch 4, wobei die von dem Master (M1) zugefügten Daten eine elektronische Signatur umfassen.

6. Verfahren nach einem der vorhergehenden Ansprüche, wobei die Slaves (S1...SN) einer Multicastgruppe (MC) angehören und das Senden des Sammeldatenpaketes (DM1) über Multicast erfolgt.

7. Verfahren nach einem der vorhergehenden Ansprüche, wobei das Senden eines Sammeldatenpaketes (DM1) zyklisch erfolgt und der maßgebliche Zeitgeber für das Senden im Master (M1) vorliegt.

8. Verfahren nach Anspruch 7, wobei der Master (M1) nach dem Senden eines Sammeldatenpaketes (DM1) eine im Betrieb konfigurierbare Maximalzeit (Tmax) auf den Empfang von Datenpaketen (DS1...DSN) aller Slaves (S1...SN) wartet, bevor er erneut ein Sammeldatenpaket (DM1) versendet, wobei vorteilhafterweise der Master (M1) das zuletzt vom jeweiligen Slave (S1 ...SN) empfangene Datenpaket (DS1...DSN) in das mit Erreichen der Maximalzeit (Tmax) an die Slaves (S1...SN) abzusendende Sammeldatenpaket verbindet.

9. Verfahren nach Anspruch 7 oder 8, wobei der Master (M1) nach dem Senden eines Sammeldatenpaketes (DM1) eine im Betrieb konfigurierbare Minimalzeit (Tmin) wartet, bevor er erneut ein Sammeldatenpaket (DM1) versendet.

10. Verfahren nach einem der vorhergehenden Ansprüche, wobei der Master (M1) im Sammeldatenpaket (DM1) Informationen zur jeweiligen Zeitspanne zwischen dem Senden des zuletzt gesendeten Sammeldatenpaketes (DM1) und dem Empfang der Daten vom jeweiligen Slave (S1...SN) ergänzt.

11. Verfahren nach Anspruch 10, wobei der jeweilige Slave (S1...SN) den Zeitpunkt zum Versenden seines nächsten Datenpaketes (DS1...DSN) an den Master (M1) anhand der vom Master (M1) ergänzten Informationen zur jeweiligen Zeitspanne dynamisch festlegt.

12. Verfahren nach einem der vorhergehenden Ansprüche, wobei für eine Mehrzahl von Slaves (S1...SN)jeweils eine Multicastgruppe (C1...CN) konfiguriert ist und eine Mehrzahl von Mastern (M1...MK) allen diesen Multicastgruppen (C1...CN) angehören und die Slaves (S1...SN) die Datenpakete (S1...SN) an ihre jeweilige Multicastgruppe (C1...CN) senden und die Mehrzahl von Mastern (M1...MK) diese Datenpakete (S1...SN) empfangen.

13. Verfahren nach Anspruch 12, wobei die Mehrzahl von Mastern (M1...MK) jeweils ein Sammeldatenpaket (DM1...DMK) an alle Slaves (S1...SN) sendet, wobei jedes Sammeldatenpaket (DM1...DMK) eine Absenderkennung enthält, anhand derer jeder Slave (S1 ...SN) die Sammeldatenpakete (DM1 ...DMK) voneinander unterscheiden kann.

14. Verfahren nach Anspruch 13, wobei in jedem Slave (S1...SN) eine Entscheidungslogik konfiguriert ist, anhand der jeweilige Slave (S1...SN) fehlerhafte und/oder unvollständige Sammeldatenpakete (DM1...DMK) wenigstens eines der Master (M1...MK) verwirft und stattdessen ein vollständiges und fehlerfreies Datenpaket von einem anderen Master (M1...MK) verarbeitet.

15. Verfahren nach einem der vorhergehenden Ansprüche, wobei die Anzahl der Master (M1...MK) und/oder die Anzahl der Slaves (S1...SN) im Betrieb konfigurierbar ist und allen Mastern (M1...MK) und Slaves (S1...SN) diese Konfiguration bekannt ist.

16. Verfahren nach einem der vorhergehenden Ansprüche, wobei im Sammeldatenpaket (DM1 ...DMK) des jeweiligen Masters (M1...MK) die Anteile der Datenpakete (DS1...DSN) der einzelnen Slaves (S1...SN) eine vorkonfigurierte feste Position haben.

17. Verfahren nach einem der Ansprüche 1 bis 15, wobei im Sammeldatenpaket (DM1...DMK) ein Datenbereich vorhanden ist, anhand dessen Inhalt die Position der einzelnen Anteile der Datenpakete (DS1...DSN) der einzelnen Slaves (S1...SN) innerhalb des Sammeldatenpaketes (DM1...DMK) eindeutig bestimmbar ist.

18. Verfahren nach einem der vorhergehenden Ansprüche, wobei die Datenpakete (DS1...DSN) zumindest teilweise elektronische Signaturen enthalten.

19. Verfahren nach einem der vorhergehenden Ansprüche, wobei die Datenpakete (DS1 ...DSN) der Slaves (S1...SN) und/oder die Sammeldatenpakete (DM1...DMK) verschlüsselt werden.

20. Verfahren nach einem der vorhergehenden Ansprüche, wobei in den Mastern (M1 ...MK) und/oder den Slaves (S1...SN) jeweils Zählerspeicher vorhanden sind, in denen die Anzahl an gesendeten und/oder an vollständig empfangenen und/oder an unvollständig empfangenen und/oder an vollständig aber fehlerhaft empfangenen Datenpaketen (DS1...DSN) oder Sammeldatenpaketen (DM1 ...DMK) gespeichert wird.

21. Verfahren nach einem der vorhergehenden Ansprüche, wobei in den Datenpaketen (DS1...DSN) der Slaves (S1...SN) ein Datenbereich vorgesehen wird, der mit jedem neu vom Slave (DS1...DSN) versendeten Datenpaket (DS1...DSN) verändert wird, wobei durch die Slaves (S1...SN) durch Vergleich des, dem jeweiligen Slave (S1...SN) zugeordneten, Datenbereichs im zuletzt von einem Master (M1...MK) empfangenen Sammeldatenpaket (DM1...DMK) mit dem entsprechenden Datenbereich im zuvor empfangenen Sammeldatenpaket (DM1...DMK) auf Datenänderung ein Übertragungsfehler und/oder eine - verzögerung und/oder eine -verfälschung ermittelt wird.

22. Verfahren nach Anspruch 21, wobei ein Master (M1...MK) einen Wert innerhalb des Sammeldatenpaketes (DM1...DMK) vorgibt, der sich von einem entsprechenden Wert innerhalb des zuvor gesendeten Sammeldatenpaktes (DM1...DMK)unterscheidet, und alle Slaves diesen Wert in den Datenbereich des als nächstes zu sendenden Datenpakets (DS1...DSN) übernehmen.

23. Verfahren nach einem der vorherigen Ansprüche, wobei in dem jeweiligen Slave (S1...SN) eine Slave-Maximalzeit (TmaxSlave) hinterlegt wird, wobei, wenn durch den jeweiligen Slave (S1...SN) innerhalb der Slave-Maximalzeit (TmaxSlave) kein neues Sammeldatenpaket (DM1...DMK) empfangen wurde, der jeweilige Slave (S1...SN) einen Ausfall eines Masters (M1...MK) und/oder eine Unterbrechung einer Kommunikationsverbindung ermittelt.

24. Verfahren nach einem der vorherigen Ansprüche, wobei in den Datenpaketen (DS1...DNS) der Slaves (S1...SN) und/oder den Sammeldatenpaketen (DM1...DMK) der Master (M1...MK) Datenbereiche vorgesehen werden, in denen eine Information über erkannte Zeitüberschreitungen hinterlegt wird.

25. Verbund umfassend mindestens drei Sicherheitssteuerungen (M1, S1 ... SN), ausgebildet zum gemäß einer Sicherheitsnorm funktional sicheren Ein- und Ausschalten eines elektrischen Verbrauchers, wobei eine Sicherheitssteuerung als Master (M1) bereitgestellt wird oder der Master als separates Gerät innerhalb des Verbunds ausgebildet ist, und wobei eine Mehrzahl der Sicherheitssteuerungen als Slaves (S1 ... SN) ausgebildet ist, und wobei der Verbund dazu ausgebildet ist, das Verfahren nach einem der vorhergehenden Ansprüche 1 bis 24 auszuführen.

## Claims

1. A method for the functionally safe exchange of information between at least three safety controllers in accordance with a safety standard, designed for the functionally safe control of an electrical consumer in accordance with a safety standard, wherein
a master (M1) is provided, and a plurality of security controllers are designed as a slave (S1...SN), and wherein data packets (DS1...DSN) are received from a plurality of slaves (S1...SN) by the master (M1), the master (M1) connects the data packets (DS1...DSN) to form a collective data packet (DM1), and sends the collective data packet (DM1) to all the slaves (S1...SN).

2. The method according to claim 1, wherein the functionally secure data portions of the data packets (DS1...DSN) are contained unchanged in the collective data packet (DM1).

3. The method according to claim 2, whereby the formation of the collective data packet (DM1) is carried out by a non-secure processing unit.

4. The method according to one of the preceding claims, wherein the received data packets (DS1...DSN) are processed by the master (M1) in a functionally secure manner before being connected to the collective data packet (DM1) in such a way that portions of the data packets (DS1...DSN) are removed and/or data is added to the data packets (DS1...DSN).

5. The method according to claim 4, wherein the data added by the master (M1) comprises an electronic signature.

6. The method according to one of the preceding claims, wherein the slaves (S1...SN) belong to a multicast group (MC) and the transmission of the collective data packet (DM1) takes place via multicast.

7. The method according to one of the preceding claims, wherein the transmission of a collective data packet (DM1) is cyclical and the decisive timer for the transmission is present in the master (M1).

8. The method according to claim 7, wherein the master (M1), after sending a collective data packet (DM1), waits a maximum time (Tmax), which can be configured during operation, for the reception of data packets (DS1...DSN) from all slaves (S1...DSN).SN) before it again sends a collective data packet (DM1), the master (M1) advantageously connecting the data packet (DS1...DSN) last received by the respective slave (S1...SN) into the collective data packet to be sent to the slaves (S1...SN) when the maximum time (Tmax) is reached.

9. The method according to claim 7 or 8, wherein the master (M1) waits a minimum time (Tmin), which can be configured during operation, after transmission of a collective data packet (DM1) before it transmits a collective data packet (DM1) again.

10. The method according to one of the preceding claims, wherein the master (M1) adds information in the collective data packet (DM1) about the respective time interval between the transmission of the last transmitted collective data packet (DM1) and the receipt of the data from the respective slave (S1...SN).

11. The method according to claim 10, wherein the respective slave (S1...SN) dynamically determines the time for sending its next data packet (DS1...DSN) to the master (M1) on the basis of the information supplemented by the master (M1) at the respective time interval.

12. The method according to one of the preceding claims, wherein a multicast group (C1...CN) is configured for a plurality of slaves (S1...SN), and a plurality of masters (M1...MK) are assigned to all of these multicast groups (C1...CN) and the slaves (S1...SN) transmit the data packets (S1...SN) to their respective multicast group (C1...CN) and the plurality of masters (M1...MK) receive these data packets (S1...SN).

13. The method according to claim 12, wherein the plurality of masters (M1...MK) each sends a collective data packet (DM1...DMK) to all slaves (S1...SN), wherein each collective data packet (DM1...DMK) contains a sender identification, on the basis of which each slave (S1...SN) can distinguish the collective data packets (DM1...DMK) from one another.

14. The method according to claim 13, wherein a decision logic is configured in each slave (S1...SN), on the basis of which respective slave (S1...SN) rejects erroneous and/or incomplete collective data packets (DM1...DMK) of at least one of the masters (M1...MK) and instead processes a complete and error-free data packet from another master (M1...MK).

15. The method according to one of the preceding claims, wherein the number of masters (M1...MK) and/or the number of slaves (S1...SN) is configurable during operation and all masters (M1...MK) and slaves (S1...SN) are aware of this configuration.

16. The method according to one of the preceding claims, wherein in the collective data packet (DM1...DMK) of the respective master (M1...MK) the portions of the data packets (DS1...DSN) of the individual slaves (S1...SN) have a preconfigured fixed position.

17. The method according to one of claims 1 to 15, wherein a data area is present in the collective data packet (DM1...DMK), on the basis of the content of which the position of the individual components of the data packets (DS1...DSN) of the individual slaves (S1...SN) within the collective data packet (DM1...DMK) can be unambiguously determined.

18. The method according to one of the preceding claims, whereby the data packets (DS1...DSN) at least partially contain electronic signatures.

19. The method according to one of the preceding claims, wherein the data packets (DS1...DSN) of the slaves (S1...SN) and/or the collective data packets (DM1...DMK) are encrypted.

20. The method according to one of the preceding claims, wherein counter memories are present in each case in the masters (M1...MK) and/or the slaves (S1...SN), in which the number of transmitted and/or completely received and/or incompletely received and/or completely but incorrectly received data packets (DS1...DSN) or collective data packets (DM1...DMK) is stored.

21. The method according to one of the preceding claims, wherein a data area is provided in the data packets (DS1...DSN) of the slaves (S1...SN), which data area is changed with each new data packet (DS1...DSN) sent by the slave (DS1...DSN), wherein a transmission error and/or delay and/or corruption is determined by the slaves (S1...SN) through comparison of the data area assigned to the respective slave (S1...SN) in the last collective data packet (DM1...DMK) received by a master (M1...MK) with the corresponding data area in the previously received collective data packet (DM1...DMK) for a data change.

22. The method according to claim 21, wherein a master (M1...MK) specifies a value within the collective data packet (DM1...DMK) which is different from a corresponding value within the previously transmitted collective data packet (DM1...DMK), and all slaves transfer this value into the data area of the data packet (DS1...DSN) to be transmitted next.

23. The method according to one of the previous claims, wherein a slave maximum time (TmaxSlave) is stored in the respective slave (S1...SN), wherein, if no new collective data packet (DM1...DMK) has been received by the respective slave (S1...SN) within the slave maximum time (TmaxSlave), the respective slave (S1...SN) determines a failure of a master (M1...MK) and/or an interruption of a communication connection.

24. The method according to one of the previous claims, wherein data areas are provided in the data packets (DS1...DNS) of the slaves (S1...SN) and/or the collective data packets (DM1...DMK) of the masters (M1...MK), in which information about detected timeouts is stored.

25. A network comprising at least three safety controllers (M1, S1, SN), designed to switch an electrical load on and off in a functionally safe manner in accordance with a safety standard, with one safety controller being provided as a master (M1) or the master being designed as a separate device within the network, and
wherein a plurality of said safety controllers are formed as slaves (S1...SN), and wherein said network is adapted to perform the method according to any one of the preceding claims 1 to 24.

## Revendications

1. Procédé pour l'échange fonctionnellement sécurisé d'informations entre au moins trois dispositifs de commande de sécurité selon une norme de sécurité, conçus pour la commande fonctionnellement sécurisée d'un consommateur électrique selon une norme de sécurité, dans lequel
un maître (M1) est fourni, et une pluralité de dispositifs de commande de sécurité sont conçus en tant qu'esclave (S1...SN), et dans lequel des paquets de données (DS1...DSN) sont reçus à partir d'une pluralité d'esclaves (S1...SN) par le maître (M1), le maître (M1) relie les paquets de données (DS1...DSN) pour former un paquet de données collectif (DM1), et envoie le paquet de données collectif (DM1) à tous les esclaves (S1...SN).

2. Procédé selon la revendication 1, dans lequel les parties de données fonctionnellement sécurisées des paquets de données (DS1...DSN) sont contenues non modifiées dans le paquet de données collectif (DM1).

3. Procédé selon la revendication 2, dans lequel la formation du paquet de données collectif (DM1) est effectuée par une unité de traitement non sécurisée.

4. Procédé selon l'une des revendications précédentes, dans lequel les paquets de données (DS1...DSN) reçus sont traités par le maître (M1) d'une manière fonctionnellement sécurisée avant d'être reliés au paquet de données collectif (DM1) de telle sorte que des parties des paquets de données (DS1...DSN) sont supprimées et/ou des données sont ajoutées aux paquets de données (DS1...DSN).

5. Procédé selon la revendication 4, dans lequel les données ajoutées par le maître (M1) comprennent une signature électronique.

6. Procédé selon l'une des revendications précédentes, dans lequel les esclaves (S1...SN) appartiennent à un groupe de multidiffusion (MC) et la transmission du paquet de données collectif (DM1) a lieu par l'intermédiaire d'une multidiffusion.

7. Procédé selon l'une des revendications précédentes, dans lequel la transmission d'un paquet de données collectif (DM1) est cyclique et le temporisateur décisif pour la transmission est présent dans le maître (M1).

8. Procédé selon la revendication 7, dans lequel le maître (M1), après envoi d'un paquet de données collectif (DM1), attend un temps maximal (Tmax), qui peut être configuré pendant le fonctionnement, pour la réception de paquets de données (DS1...DSN) à partir de tous les esclaves (S1...SN) avant qu'il n'envoie une nouvelle fois un paquet de données collectif (DM1), dans lequel le maître (M1) relie de manière avantageuse le paquet de données (DS1...DSN) reçu en dernier par l'esclave (S1...SN) respectif dans le paquet de données collectif à envoyer aux esclaves (S1...SN) lorsque le temps maximal (Tmax) est atteint.

9. Procédé selon la revendication 7 ou 8, dans lequel le maître (M1) attend un temps minimal (Tmin), qui peut être configuré pendant le fonctionnement, après transmission d'un paquet de données collectif (DM1) avant qu'il ne transmette un paquet de données collectif (DM1) une nouvelle fois.

10. Procédé selon l'une des revendications précédentes, dans lequel le maître (M1) ajoute des informations dans le paquet de données collectif (DM1) concernant l'intervalle de temps respectif entre la transmission du paquet de données collectif (DM1) transmis en dernier et la réception des données en provenance de l'esclave (S1...SN) respectif.

11. Procédé selon la revendication 10, dans lequel l'esclave (S1...SN) respectif détermine de manière dynamique l'instant pour envoyer son paquet de données (DS1...DSN) suivant au maître (M1) sur la base des informations complétées par le maître (M1) à l'intervalle de temps respectif.

12. Procédé selon l'une des revendications précédentes, dans lequel un groupe de multidiffusion (C1...CN) est configuré pour une pluralité d'esclaves (S1...SN), et une pluralité de maîtres (M1...MK) sont affectés à l'ensemble de ces groupes de multidiffusion (C1...CN) et les esclaves (S1...SN) transmettent les paquets de données (S1...SN) à leur groupe de multidiffusion (C1...CN) respectif et la pluralité de maîtres (M1...MK) reçoivent ces paquets de données (S1...SN).

13. Procédé selon la revendication 12, dans lequel la pluralité de maîtres (M1...MK) envoient chacun un paquet de données collectif (DM1...DMK) à tous les esclaves (S1...SN), chaque paquet de données collectif (DM1...DMK) contenant une identification d'expéditeur, sur la base de laquelle chaque esclave (S1...SN) peut distinguer les paquets de données collectifs (DM1...DMK) d'un autre.

14. Procédé selon la revendication 13, dans lequel une logique de décision est configurée dans chaque esclave (S1...SN), sur la base de laquelle l'esclave (S1...SN) respectif rejette des paquets de données collectifs (DM1...DMK) erronés et/ou incomplets d'au moins l'un des maîtres (M1...MK) et traite à la place un paquet de données complet et sans erreur en provenance d'un autre maître (M1...MK).

15. Procédé selon l'une des revendications précédentes, dans lequel le nombre de maîtres (M1...MK) et/ou le nombre d'esclaves (S1...SN) sont configurables pendant le fonctionnement et tous les maîtres (M1...MK) et esclaves (S1...SN) sont informés de cette configuration.

16. Procédé selon l'une des revendications précédentes, dans lequel, dans le paquet de données collectif (DM1...DMK) du maître (M1...MK) respectif, les parties des paquets de données (DS1...DSN) des esclaves individuels (S1...SN) ont une position fixe préconfigurée.

17. Procédé selon l'une des revendications 1 à 15, dans lequel une zone de données est présente dans le paquet de données collectif (DM1...DMK), sur la base duquel contenu la position des parties individuelles des paquets de données (DS1...DSN) des esclaves individuels (S1...SN) dans le paquet de données collectif (DM1...DMK) peut être déterminée de manière non ambiguë.

18. Procédé selon l'une des revendications précédentes, dans lequel les paquets de données (DS1...DSN) contiennent au moins en partie des signatures électroniques.

19. Procédé selon l'une des revendications précédentes, dans lequel les paquets de données (DS1...DSN) des esclaves (S1...SN) et/ou les paquets de données collectifs (DM1...DMK) sont chiffrés.

20. Procédé selon l'une des revendications précédentes, dans lequel des mémoires de compteur sont présentes dans chaque cas dans les maîtres (M1...MK) et/ou les esclaves (S1...SN), dans lesquelles le nombre de paquets de données (DS1...DSN) ou de paquets de données collectifs (DM1...DMK) transmis et/ou complétement reçus et/ou non complétement reçus et/ou complétement mais non correctement reçus est stocké.

21. Procédé selon l'une des revendications précédentes, dans lequel une zone de données est prévue dans les paquets de données (DS1...DSN) des esclaves (S1...SN), laquelle zone de données est modifiée avec chaque nouveau paquet de données (DS1...DSN) envoyé par l'esclave (S1...SN), une erreur et/ou un retard et/ou une corruption de transmission étant déterminé (e) par les esclaves (S1...SN) par l'intermédiaire d'une comparaison de la zone de données affectée à l'esclave (S1...SN) respectif dans le dernier paquet de données collectif (DM1...DMK) reçu par un maître (M1...MK) à la zone de données correspondante dans le paquet de données collectif (DM1...DMK) précédemment reçu pour une modification de données.

22. Procédé selon la revendication 21, dans lequel un maître (M1...MK) spécifie une valeur dans le paquet de données collectif (DM1...DMK) qui est différente d'une valeur correspondante dans le paquet de données collectif (DM1...DMK) précédemment transmis, et tous les esclaves reprennent cette valeur dans la zone de données du paquet de données (DS1...DSN) à transmettre ensuite.

23. Procédé selon l'une des revendications précédentes, dans lequel un temps maximal d'esclave (TmaxEsclave) est stocké dans l'esclave (S1...SN) respectif, dans lequel, si aucun nouveau paquet de données collectif (DM1...DMK) n'a été reçu par l'esclave (S1...SN) respectif dans le temps maximal d'esclave (TmaxEsclave), l'esclave (S1...SN) respectif détermine une défaillance d'un maître (M1...MK) et/ou une interruption d'une connexion de communication.

24. Procédé selon l'une des revendications précédentes, dans lequel des zones de données sont prévues dans les paquets de données (DS1...DNS) des esclaves (S1...SN) et/ou les paquets de données collectifs (DM1...DMK) des maîtres (M1...MK), dans lesquelles des informations concernant des temporisations détectées sont stockées.

25. Réseau comprenant au moins trois dispositifs de commande de sécurité (M1, S1, SN), conçus pour activer et désactiver une charge électrique d'une manière fonctionnellement sécurisée selon une norme de sécurité, dans lequel un dispositif de commande de sécurité est fourni en tant que maître (M1) ou le maître est conçu en tant que dispositif distinct dans le réseau, et
dans lequel une pluralité desdits dispositifs de commande de sécurité sont formés en tant qu'esclaves (S1...SN), et dans lequel ledit réseau est apte à réaliser le procédé selon l'une quelconque des revendications précédentes 1 à 24.
